# EUROPÄISCHE PATENTSCHRIFT

(11) **EP 1 771 500 B1**
(45) Veröffentlichungstag und Bekanntmachung des Hinweises auf die Patenterteilung: **30.01.2008**
(21) Anmeldenummer: 05762879.4
(22) Anmeldetag: 29.07.2005
(51) Int. Cl.: C08J 3/20, B29B 7/78, B29B 7/94, B29C 47/10

(54) **VERFAHREN ZUM MISCHEN EINES KUNSTSTOFFGRANULATS MIT EINEM ADDITIV SOWIE MISCHEINRICHTUNG ZUR DURCHFÜHRUNG DES VERFAHRENS UND VORRICHTUNG MIT DER MISCHEINRICHTUNG**
METHOD FOR MIXING A PLASTIC GRANULATE WITH AN ADDITIVE AND MIXING DEVICE FOR CARRYING OUT SAID METHOD AND DEVICE PROVIDED WITH SAID MIXING DEVICE
PROCEDE DE MELANGE DE GRANULES PLASTIQUES AVEC UN ADDITIF, DISPOSITIF DE MELANGE PERMETTANT DE METTRE EN OEUVRE CE PROCEDE ET SYSTEME COMPRENANT CE DISPOSITIF

(30) Priorität: 30.07.2004 CH 129004
(43) Veröffentlichungstag der Anmeldung: 11.04.2007
(73) Patentinhaber: Silon s.r.o. Planá nad Lu'znici, 391 02 Sezimovo Ústi 2 (CZ)
(72) Erfinder: KEMPTER, Werner, c/o PEP AG, CH-9430 St. Margrethen (CH)
(74) Vertreter: Hasler, Erich
(86) Internationale Anmeldenummer: PCT/CH2005/000455
(87) Internationale Veröffentlichungsnummer: WO 2006/010291

(56) Entgegenhaltungen:
- EP-A- 0 695 320
- DE-A1- 3 035 709
- DE-A1- 4 141 452

## Beschreibung

### Gebiet der Erfindung

Die Erfindung betrifft ein Verfahren und eine Mischeinrichtung gemäss Oberbegriff der Ansprüche 1 und 5, sowie eine Vorrichtung zur Herstellung extrudierter Produkte aus Polymeren mit der Mischeinrichtung gemäss Anspruch 10.

### Stand der Technik

Die EP-A-695 320 betrifft ein Verfahren zur Herstellung eines vernetzten, extrudierten Polymerproduktes, wobei das zu vernetzende, eine zerklüftete Oberfläche aufweisende Polymer mit flüssigen Additiven durch Extrudieren in einer Stranggiessvorrichtung verarbeitet wird. Beim beschriebenen Verfahren wird ein über eine Zuführeinrichtung eingebrachtes flüssiges Additiv, welches der Vernetzung dient, mit dem Polymeren vermischt. Die Zufuhr des Additivs erfolgt zwischen einer Zuführvorrichtung für das Polymer und der Stranggiessvorrichtung. Bei einer Vorrichtung zur Durchführung des Verfahrens ist ein Mischer zwischen einem Aufgabetrichter zur Aufnahme eines Polymergranulats/Polymerpulvers und einem Schneckenextruder angeordnet. In den Mischer mündet eine von einer Dosierpumpeneinheit kommende Zuführleitung für ein flüssiges Additiv. Eine am Mischer angeordnete Düse erlaubt es, das durch die Zuführleitung transportierte, flüssige Additiv in den Mischer einzuspritzen. Die beschriebene Vorrichtung ist für einen kontinuierlichen Betrieb konzipiert, bei welchem Granulat und Additiv kontinuierlich zugegeben werden.

Die DE-OS-26 31 622 offenbart ein Verfahren und eine Vorrichtung zum gleichzeitigen und kontinuierlichen Zuführen von Flüssigkeiten und pulverförmigen Feststoffen in Behandlungsmaschinen. Dabei wird die Flüssigkeit zu einem schlauchartigen Mantel geformt, in dessen Zentrum die Feststoffe eingegeben werden. Gemäss einem Ausführungsbeispiel ist im engsten Querschnitt einer trichterförmig ausgebildeten Zuführeinrichtung für rieselfähige Feststoffe eine Kegelringdüse angeordnet, die an eine Flüssigkeitszuführleitung angeschlossen ist. Die rieselfähigen Feststoffe treten im Bereich des engsten Querschnittes durch den Flüssigkeitsmantel hindurch und rieseln als weitgehend geschlossener Feststoffstrom in die Zuführöffnung eines Mischers, ohne die Innenwand des Zuführstutzens zu berühren. Ziel der DE-OS-36 31 622 ist es, Anbackungen und Verstopfungen zu verhindern, ohne dass mechanische Hilfsmittel eingesetzt werden müssten.

Die US 5,626,422 offenbart eine Vorrichtung und ein Verfahren zur Herstellung einer homogenen Lösung eines Pulvers in einer Flüssigkeit. Dabei werden in einem ersten Schritt ein Pulver und eine Flüssigkeit gleichzeitig von einer Pulver-/Flüssigkeits-Abgabevorrichtung in einen Mischer geleitet, wobei der Kontakt zwischen der Flüssigkeit und dem Pulver vor dem Eintritt in den Mischer minimiert werden soll. Zur Lösung der Aufgabe ist eine Pulver-/Flüssigkeits-Abgabevorrichtung bestehend aus einem zylindrischen Rohrabschnitt und einem daran anschliessenden Trichter vorgesehen. Die Flüssigkeit wird mittels einer ersten und einer zweiten Zuführleitung zugeführt. Die erste Zuführleitung ist als Ringdüse ausgebildet, welche im oberen Abschnitt des zylindrischen Rohrabschnitts angeordnet ist und für eine Benetzung der Innenfläche des Stutzens sorgt. Die zweite Zuführleitung für die Flüssigkeit ist im Trichter exzentrisch oberhalb der Trichteröffnung positioniert. Im Betrieb wird 90% der Flüssigkeit durch die zweite Zuführleitung zugeführt. Das Pulver wird durch ein Rohr eines engen Querschnitts, dessen Austrittsöffnung oberhalb und zentrisch zur Trichteröffnung angeordnet ist, in die Pulver-/Flüssigkeits-Abgabevorrichtung geleitet. Die Mischung der Flüssigkeit und des Pulvers erfolgt in einem an die Trichteröffnung angeschlossenen Intensiv-Mischer. Ziel der US 5,626,422 ist es, eine Klumpenbildung vor dem Eintritt in den Intensiv-Mischer zu verhindern.

### Aufgabe der Erfindung

Aufgabe der vorliegenden Erfindung ist es, ein Verfahren und eine Mischeinrichtung bereitzustellen, welche eine gute Durchmischung eines flüssigen Additivs mit einem Kunststoffgranulat erlauben. Ein weiteres Ziel ist es, eine Mischeinrichtung vorzuschlagen, welche eine Trennung der Aufgabeeinrichtung von der Stranggiessvorrichtung ermöglicht. Die vorgeschlagene Mischeinrichtung soll robust und kostengünstig herstellbar sein.

### Beschreibung

Erfindungsgemäss wird die Aufgabe durch ein Verfahren gemäss Oberbegriff von Anspruch 1 dadurch gelöst, dass die Austrittsöffnung der Einspritzvorrichtung oberhalb eines trichterförmig ausgebildeten Leitstücks angeordnet wird. Dieses Verfahren hat den Vorteil, dass eine gute und gleichmässige Benetzung des Schüttgutes erreicht wird. Ausserdem kann es auch bei bereits bestehenden Anlagen eingesetzt werden, wenn ein entsprechender Mischer nachgerüstet wird. Eine Anwendung des erfindungsgemässen Verfahrens ist beispielsweise die Benetzung eines Kunststoffgranulats mit einem Additiv, z.B. Silan, in einem reaktiven Stranggiessverfahren.

Vorzugsweise wird das Schüttgut durch einen im Durchgang vorgesehenen Spalt, vorzugsweise einen Ringspalt, geleitet. Zu diesem Zweck wird die Einspritzeinrichtung vorzugsweise derart angeordnet, dass zwischen der Einspritzvorrichtung und dem Rohrabschnitt ein Spalt für den Durchtritt des Schüttgutes vorhanden ist Dies hat den Vorteil, dass ein durchgehender Schüttgutvorhang gebildet wird, welcher an der Innenfläche des Mischers herunterrieselt resp. fällt. Dadurch wird eine grosse und gut benetzbare Oberfläche des Schüttgutes geschaffen. Ausserdem wird eine sehr gute Durchdringung des Schüttgutes mit Flüssigkeit erreicht. Ein weiterer überraschender Vorteil ist, dass keine Anbackungen stattfinden und somit ein störungsfreier Betrieb möglich ist. Vorteilhaft wird die Weite des Ringspalts in Abhängigkeit der physikalischen Parameter der Flüssigkeit (Viskosität, Temperatur, Oberflächenspannung etc.) und des Schüttgutes (Korngrösse, Verteilung der Korngrösse etc.) eingestellt. Dies erlaubt eine exakte Einstellung der gewünschten Benetzung.

Gegenstand der vorliegenden Erfindung ist auch eine Mischeinrichtung gemäss Oberbegriff von Anspruch 5, welche dadurch gekennzeichnet ist, dass im Durchgang der Mischeinrichtung ein trichterförmig ausgebildetes Leitstück vorgesehen ist und die Austrittsöffnung der Einspritzvorrichtung oberhalb des trichterförmig ausgebildeten Leitstücks angeordnet ist. Diese Mischeinrichtung hat den Vorteil, dass das Schüttgut unterhalb der Austrittsöffnung der Einspritzvorrichtung (d.h. in Flussrichtung gesehen nach der Austrittsöffnung der Einspritzvorrichtung) ausgebreitet und vorbeigeleitet wird, sodass ein direktes Besprayen des Schüttgutes ermöglicht ist. Dadurch, dass das Schüttgut als ein praktisch zusammenhängender Vorhang vorliegt, gelangt kaum Flüssigkeit auf die Innenflächen des Rohrabschnitts, sodass kein Anbacken des Schüttgutes stattfindet. Vorteilhafte Ausführungsformen sind in den Unteransprüchen definiert.

Vorteilhaft ist zwischen der Einspritzeinrichtung und dem Mantel des Rohrabschnitts ein Spalt für den Durchtritt des Schüttgutes vorhanden. Durch den erzwungenen Durchtritt des Schüttgutes durch den Spalt wird eine gleichmässige Verteilung (Vereinzelung) und damit Benetzung des Schüttgutes ermöglicht. Eine besonders vorteilhafte Ausführungsform sieht vor, dass zwischen der Einspritzeinrichtung und dem Rohrabschnitt ein Ringspalt für den Durchtritt des Schüttgutes vorhanden ist. Der Ringspalt hat vorzugsweise eine Weite zwischen 5 und 30 mm und besonders bevorzugt eine solche zwischen 10 und 20 nun. In der bevorzugten Ausführungsform ist der Rohrabschnitt zylindrisch und der Kern, an welchem die Einspritzdüse angeordnet ist, hat einen kreisförmigen Querschnitt, sodass zwischen dem Rohrabschnitt und dem Kern ein Ringspalt vorhanden ist.

Gemäss einer vorteilhaften Ausführungsform ist unterhalb der Einspritzvorrichtung ein vorzugsweise trichterförmiges Leitstück vorgesehen. Dies hat den Vorteil, dass der Schüttgutrieselfilm unter der Einspritzdüse ausgebreitet und vorbeigeführt wird. Zweckmässigerweise ist das Leitstück im Rohrabschnitt verschiebbar. Dies hat den Vorteil, dass die Durchflussmenge einstellbar ist. Vorteilhaft sind der Kern und das Leitstück relativ zueinander von einer Offenstellung, in welcher ein Ringspalt zwischen dem Rohrabschnitt resp. dein Leitstück und dem Kern gebildet ist, in eine Schliessstellung, in welcher das Leitstück am Kern anliegt und der Durchgang für das Schüttgut versperrt ist, verschiebbar sind und umgekehrt. Dies hat den Vorteil, dass die Weite des Ringspaltes veränderbar ist und folglich die pro Zeiteinheit durch den Spalt fliessende Menge des Schüttgutes und dessen Fliessgeschwindigkeit variiert werden kann. Ausserdem ist es möglich, den Innenraum der Mischeinrichtung von der Umgebung abzutrennen. Somit können bei einem Betriebsunterbruch - wenn die Mischeinrichtung in Flussrichtung gesehen vor der Einspritzdüse verschlossen ist- keine giftigen Dämpfe in die Umgebung gelangen.

Gegenstand der vorliegenden Erfindung ist auch eine Vorrichtung zur Herstellung extrudierter Produkte aus Polymeren, insbesondere aus Polymergranulat, mit
- einer Mischeinrichtung gemäss einem der Ansprüche 5 bis 9;
- einer Aufgabeeinrichtung für mindestens ein Polymer, welche an der Eintrittsöffnung der ersten Anschlussseite der Mischeinrichtung vorgesehen oder angeschlossen ist; und
- einer Stranggiessvorrichtung, welche an der Austrittsöffnung der zweiten Anschlussseite der Mischeinrichtung vorgesehen oder angeschlossen ist.

Die Erfindung wird nachfolgend unter Bezugnahme auf die Figuren anhand eines Anwendungsbeispiels näher im Detail beschrieben. Dabei sind in den Figuren für gleiche Teile jeweils gleiche Bezugsziffern verwendet.

Es zeigt
- Fig. 1: schematisch eine Extrudiervorrichtung mit einer Aufgabeeinrichtung und einer Stranggiessvorrichtung;

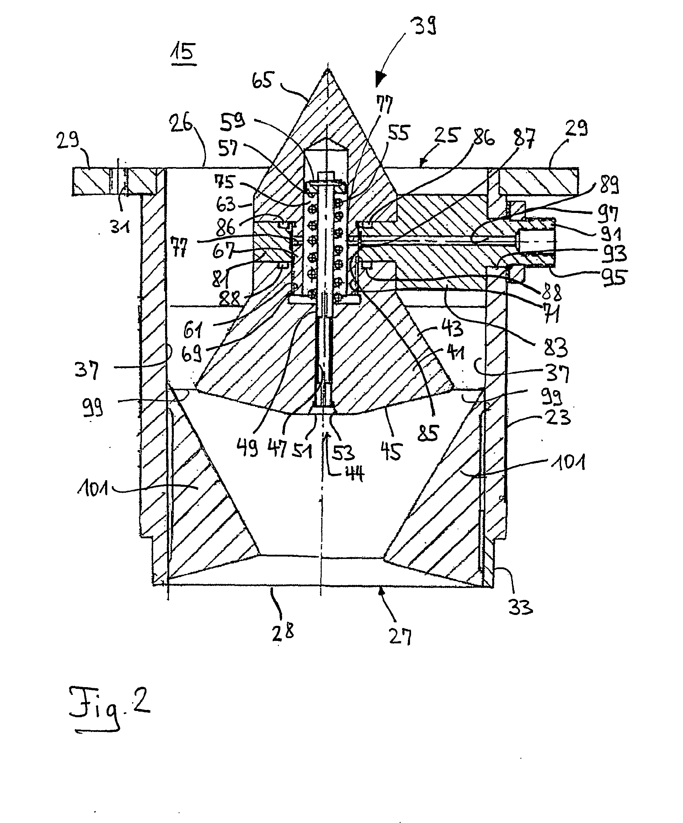

- Fig. 2: eine erste Ausführungsform einer erfindungsgemässen Mischeinrichtung im Längsschnitt; und
- Fig. 3: eine zweite Ausführungsform einer erfindungsgemässen Mischeinrichtung ebenfalls im Längsschnitt.

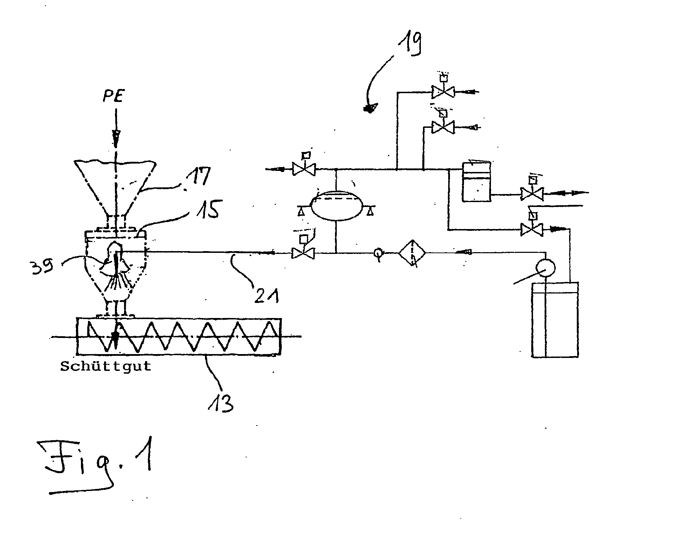

Die Figur 1 zeigt den grundsätzlichen Aufbau einer Extrudiervorrichtung 11 mit einem Schneckenextruder 13, einer auf dem Schneckenextruder 13 angeordneten Mischeinrichtung 15. Auf der Mischeinrichtung 15 ist eine Aufgabeeinrichtung 17 vorgesehen, welche der Aufnahme eines Kunststoffgranulats dient. In die Mischeinrichtung 15 mündet ferner eine von einer Dosiereinrichtung 19 kommende Zuführleitung 21 für ein flüssiges Additiv.

Gemäss einer ersten Ausführungsform besitzt die Mischeinrichtung 15 einen Rohrabschnitt 23 mit einer ersten Anschlussseite 25 für die Aufgabeeinrichtung 17 und einer zweiten Anschlussseite 27 für den Schneckenextruder 13. Die erste Anschlussseite 25 mit der Eintrittsöffnung 26 besitzt einen Flansch 29 mit Rundlöchern 31 zur lösbaren Befestigung an der Aufgabeeinrichtung 17. Die zweite Anschlussseite 27 mit der Austrittsöffnung 28 besteht aus einem Stutzen 33, welcher in eine entsprechende Aufnahme des Schneckenextruders 13 (in den Figuren nicht gezeigt) eingreifen kann. Es ist denkbar, dass zwischen der Mischeinrichtung und dem Schneckextruder ein (mechanischer) Mischer (Rührwerk) vorgesehen ist.

Die gezeigte Mischeinrichtung 15 mit dem Rohrabschnitt 23 definiert einen Durchgang 37 für ein Kunststoffgranulat definiert. Im Durchgang 37 ist eine Einspritzvorrichtung 39 angeordnet. Die Einspritzvorrichtung 39 besitzt einen Kern 41, in welchem eine Einspritzdüse 43 mit einer Austrittsöffnung 44 angeordnet ist. Der Kern 41 hat einen äusseren konusförmigen Abschnitt 43 und eine konvexe Stirnseite 45. Im Zentrum der Stirnseite 45 ist ein Rundloch 47 vorgesehen, in welchem der Stössel 49 der als Ventil ausgebildeten Einspritzdüse 43 axial beweglich geführt ist. Der Stössel 49 besitzt einen tellerförmigen Kopf 51, welcher im geschlossenen Zustand der Einspritzdüse formschlüssig in einem entsprechend ausgebildeten Ventilsitz 53 des Kerns 41 aufgenommen ist. Der Stössel 49 ist durch eine Feder 55 in die Schliessstellung vorgespannt. Zu diesem Zweck ist am hinteren Ende des Stössels 49 ein Ring 57 aufgesetzt, welcher bei auf den Stössel aufgesetzter Feder 55 an einer Klemmscheibe 59 anliegt.

Die Rückseite des Kerns 41 hat eine runde zentrale Gewindebohrung 61, in welche ein Ventilgehäuse 63 eingeschraubt ist. Das Ventilgehäuse 63 hat einen pyramidalen Kopf 65 und einen daran anschliessenden Schaft 67. Der Schaft 67 besitzt ein Aussengewinde 69, welches mit dem Innengewinde 71 der Gewindebohrung 61 zusammenwirken kann. Das Ventilgehäuse 63 besitzt eine Bohrung 73, welche einen Innenraum 75 definiert. Im Innenraum 75 ist der hintere Teil des Ventilstössels 49 mit der Feder 55 aufgenommen.

Im oberen Teil des Schafts 67 sind mehrere radiale Durchtrittsöffnungen 77 um den Schaftumfang verteilt vorgesehen. Der aus der Bohrung 73 ragende Teil des Schafts 67 ist in einem Anschlussflansch 81 eines Anschlussstücks 83 aufgenommen. Der Anschlussflansch 81 ist auf die Rückseite des Kerns 41 aufgesetzt. Dichtringe 86, 88 dienen der Abdichtung der zwischen dem Anschlussflansch 81 und dem Kern 41 resp. Kopf 65 vorhandenen Kontaktflächen. Der Anschlussflansch 81 besitzt ein Rundloch 85, in welchem der obere Teil des Schafts 67 aufgenommen ist. Im Rundloch 85 ist eine Ringnut 87 vorgesehen, in welche ein Zuführkanal 89 des Anschlussstücks 83 mündet. Das Anschlussstück 83 besitzt einen Anschlussstutzen 91, welcher in ein Loch 93 in der Wand des Rohrabschnitts 23 eingesetzt ist: Am Anschlussstutzen 91 ist ein Aussengewinde 95 vorgesehenen, auf welches eine Schraubenmutter 97 zur Befestigung des Anschlussstücks 83 am Rohrabschnitt 23 aufschraubbar ist.

Der Kern 41 der Einspritzvorrichtung 39 hat einen solchen Durchmesser, dass zwischen dessen breitestem Durchmesser und dem Rohrabschnitt 23. ein Ringspalt 99 für den Durchtritt des Kunststoffgranulats verbleibt. Unterhalb des Kerns 41 ist im Rohrabschnitt 23 ein trichterförmiges Leitstück 101 vorgesehen. Dieses dient dazu, das während des Betriebs durch den Ringspalt 99 herunterrieselnde und vereinzelte Kunststoffgranulat unter der Austrittsöffnung 44 der Düse 43 vorbeizuführen, sodass das Kunststoffgranulat gut und gleichmässig benetzt wird.

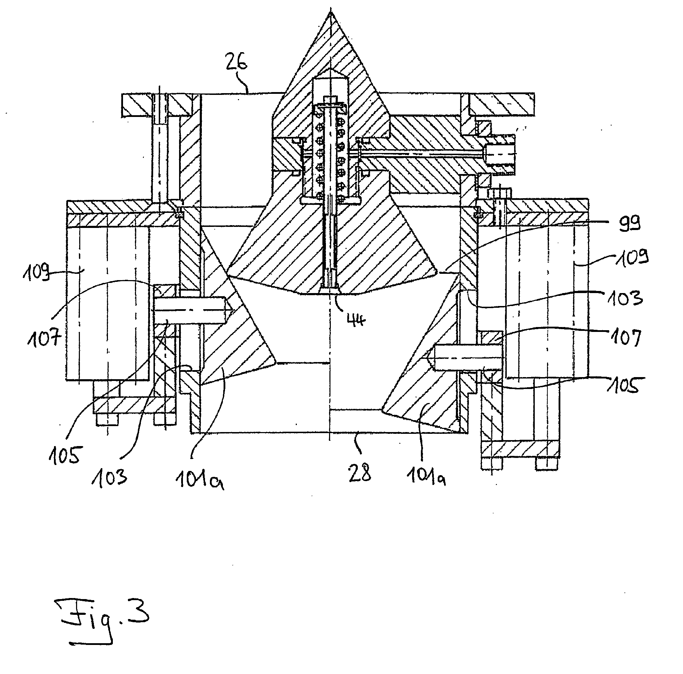

Das zweite Ausführungsbeispiel gemäss Figur 3 unterscheidet sich vom ersten dadurch, dass das trichterförmige Leitstück 101a am Rohrabschnitt 23 verschiebbar angeordnet ist. Das trichterförmige Leitstück 101a ist von einer Schliessstellung (linke Bildhälfte), in welcher der Ringspalt 99 geschlossen ist, in eine Offenstellung (rechte Bildhälfte), in welcher ein Ringspalt 99 vorhanden ist, verschiebbar ist.

Im Mantel des Rohrabschnitts 23 sind einander gegenüberliegend Langlöcher 103 vorgesehen. Die Langlöcher sind von Bolzen 105 durchsetzt, welche einerseits im trichterförmigen Leitstück 101a eingeschraubt und andererseits in Halterungen 107 eingesetzt sind. Die Halterungen 107 sind an Verstelleinrichtungen 109, z.B. Pressluftzylindern, aufgehängt.

Im Betrieb wird Kunststoffgranulat in die Aufgabeeinrichtung eingebracht und gegebenenfalls gewogen. Von der Aufgabeeinrichtung gelangt das Kunststoffgranulat in die Mischeinrichtung. Solange das trichterförmige Leitstück 101a in der oberen Endstellung ist, ist der Durchtritt des Kunststoffgranulats verunmöglicht. Sobald das Leitstück 101a nach unten in die Offenstellung bewegt wird, gelangt das Granulat durch den Ringspalt 99 in den Durchgang 37. Gleichzeitig mit dem Öffnen des Ringspaltes wird flüssiges Additiv durch die Düse in den Durchgang gespritzt, wo es das Kunststoffgranulat benetzt. Die Steuerung der Menge des eingebrachten Additivs kann durch Druckbeaufschlagung erfolgen. Je höher der Druck, welcher auf das flüssige Additiv ausgeübt wird, desto grösser die pro Zeiteinheit eingebrachte Flüssigkeitsmenge. Zur Einhaltung des optimalen Granulat/Additiv-Verhältnisses können somit die Druckbeaufschlagung und die Weite des Ringspaltes verändert werden.

Obwohl die Erfindung mit Bezug auf eine konkrete Anwendung beschrieben wurde, ist dem fachkundigen Leser klar, dass das erfindungsgemässe Verfahren und die erfindungsgemässe Vorrichtung zur Benetzung eines beliebigen frei fliessenden Schüttgutes mit einer Flüssigkeit verwendbar sind. Auch kann bei der beschriebenen Vorrichtung ausgangsseitig direkt an einen Schneckextruder oder an einen mechanischen Mischer angeschlossen sein. Das erfindungsgemässe Verfahren und die erfindungsgemässe Vorrichtung können sowohl für die kontinuierliche oder die batchweise Zugabe einer Flüssigkeit zu einem Schüttgut eingesetzt werden.

### Bezugsziffern

- 11: Extrudiervorrichtung
- 13: Schneckenextruder
- 15: Mischeinrichtung
- 17: Aufgabeeinrichtung
- 19: Dosiereinrichtung
- 21: Zuführleitung
- 23: Rohrabschnitt
- 25: erste Anschlussseite für Aufgabeeinrichtung
- 26: Eintrittsöffnung
- 27: zweite Anschlussseite für Schneckenextruder
- 28: Austrittsöffnung
- 29: Flansch
- 31: Rundlöchern
- 33: Stutzen
- 37: Durchgang
- 39: Einspritzvorrichtung
- 41: Kern
- 43: konusförmigen Abschnitt
- 45: konvexe Stirnseite
- 47: Rundloch
- 49: Stössel
- 51: Kopf
- 53: Ventilsitz
- 55: Feder
- 57: Ring
- 59: Klemmscheibe
- 61: zentrale Gewindebohrung des Kerns
- 63: Ventilgehäuse
- 65: pyramidaler Kopf
- 67: Schaft
- 69: Aussengewinde
- 71: Innengewinde
- 73: Bohrung
- 75: Innenraum
- 77: Durchtrittsöffnungen
- 79:
- 81: Anschlussflansch
- 83: Anschlussstücks
- 85: Rundloch
- 87: Ringnut
- 89: Zuführkanal
- 91: Anschlussstutzen
- 93: Loch in der Wand des Rohrabschnitts
- 95: Aussengewinde
- 97: Schraubenmutter
- 99: Ringspalt
- 101: trichterförmiges Leitstück
- 103: Langlöcher
- 105: Bolzen
- 107: Halterungen
- 109: Verstelleinrichtungen

## Patentansprüche

1. Verfahren zum Mischen eines frei fliessenden Schüttgutes, insbesondere eines festen Kunststoffgranulats, mit einer Flüssigkeit, insbesondere einem flüssigen Additiv, bei welchem Verfahren eine Einspritzvorrichtung im Zentrum eines der Zuführung des Schüttgutes dienenden Rohrabschnitts (23) angeordnet und ein durch die stirnseitige Eintrittsöffnung in den Rohrabschnitt (23) geleitetes Schüttgut mit einer Flüssigkeit wenigstens teilweise benetzt wird,
**dadurch gekennzeichnet,**
**dass** die Austrittsöffnung der Einspritzvorrichtung (39) oberhalb eines trichterförmig ausgebildeten Leitstücks (101) angeordnet wird.

2. Verfahren nach Anspruch 1, **dadurch gekennzeichnet, dass** die Einspritzeinrichtung (39) derart angeordnet wird; dass zwischen der Einspritzvorrichtung (39) und dem Rohrabschnitt (23) ein Spalt (99) für den Durchtritt des Schüttgutes vorhanden ist.

3. Verfahren nach Anspruch 1 oder 2, **dadurch gekennzeichnet, dass** das Schüttgut durch einen im Durchgang vorhandenen Ringspalt (99) geleitet wird.

4. Verfahren nach einem der Ansprüche 1 bis 3, **dadurch gekennzeichnet, dass** die Weite des Ringspalts (99) in Abhängigkeit der physikalischen Parameter der Flüssigkeit und des Schüttgutes eingestellt wird.

5. Mischeinrichtung mit einem vorzugsweise rohrförmigen, einen Durchgang definierenden Rohrabschnitt (23) mit
- einer ersten Anschlussseite (25) mit einer Eintrittsöffnung (26) für den Anschluss einer Aufgabeeinrichtung (17) für einen rieselfähigen Feststoff,
- einer zweiten Anschlussseite (27) mit einer Austrittsöffnung (28) für den Anschluss beispielsweise einer Stranggiessvorrichtung (13) oder eines mechanischen Mischers, sowie
- einer im Zentrum des rohrförmigen Durchgangs (37) angeordneten Einspritzvorrichtung (39) für ein flüssiges Additiv, deren Austrittsöffnung in Flussrichtung des Schüttgutes orientiert ist,
**dadurch gekennzeichnet,**
**dass** im Durchgang der Mischeinrichtung (15) ein trichterförmig ausgebildetes Leitstück (101) vorgesehen ist und die Austrittsöffnung der Einspritzvorrichtung (39) oberhalb des trichterförmig ausgebildeten Leitstücks (101) angeordnet ist.

6. Mischeinrichtung nach Anspruch 5, **dadurch gekennzeichnet, dass** zwischen der Einspritzvorrichtung und dem Rohrabschnitt (23) ein Spalt für den Durchtritt des Schüttgutes vorhanden ist.

7. Mischeinrichtung nach einem der Ansprüche 5 bis 7, **dadurch gekennzeichnet, dass** zwischen der Einspritzvorrichtung (39) und dem Mantel des Rohrabschnitts (23) ein Ringspalt (99) vorhanden ist.

8. Mischeinrichtung nach einem der Ansprüche 5 bis 8, **dadurch gekennzeichnet, dass** die Einspritzvorrichtung (39) einen Kern (41) und eine an der Unterseite des Kerns angeordnete Düse besitzt.

9. Mischeinrichtung nach einem der Ansprüche 5 bis 8, **dadurch gekennzeichnet, dass** unterhalb der Einspritzvorrichtung (39) ein Leitstück (101; 101a) vorgesehen ist.

10. Mischeinrichtung nach Anspruch 9, **dadurch gekennzeichnet, dass** das Leitstück (101a) im Rohrabschnitt (23) verschiebbar ist.

11. Mischeinrichtung nach Anspruch 9 oder 10, **dadurch gekennzeichnet, dass** der Kern (41) und das Leitstück (101) relativ zueinander von einer Offenstellung, in welcher ein Ringspalt (99) gebildet ist, in eine Schliessstellung, in welcher der Durchgang für das Schüttgut versperrt ist, verschiebbar sind und umgekehrt.

12. Vorrichtung zur Herstellung extrudierter Produkte aus Polymeren, insbesondere aus Polymergranulat, mit
- einer Mischeinrichtung (15) gemäss einem der Ansprüche 5 bis 11;
- einer Aufgabeeinrichtung (17) für mindestens ein Polymer, welche an der Eintrittsöffnung (26) der Mischeinrichtung, nachfolgend auch erste Anschlussseite genannt, vorgesehen oder angeschlossen ist; und
- einer Stranggiessvorrichtung (13), welche an der Austrittsöffnung (28) der Mischeinrichtung, nachfolgend auch zweite Anschlussseite genannt, vorgesehen oder angeschlossen ist.

## Claims

1. A method for mixing a free-flowing bulk material, in particular of a solid granulate, with a liquid, in particular of a liquid additive, comprising using an injection apparatus which is arranged in the center of a tube segment (23) that feeds said bulk material and wherein said bulk material is conducted through an end-face inlet into said tube segment (23) and which is at least partially wetted with a liquid, **characterized in that** the outlet of said injection apparatus (39) is arranged above a funnel-shaped guide piece (101).

2. The method according to claim 2, further comprising arranging said injection apparatus (39) such that a gap (99) for said bulk material to pass through is present between said injection apparatus (39) and said tube segment (23).

3. The method according to claim 1 or 2, further comprising arranging said gap into an annular gap (99).

4. The method according to any of claims 1 to 3, further comprising setting a width of said annular gap (99) as a function of the physical parameters of said liquid and said bulk material.

5. A mixing device comprising a tube-shaped tube segment (23) defining a passage and having:
a first connection side (25), having an inlet (26) for connecting a feed device (17) for a pourable solid;
a second connection side (27), having an outlet (28) for connecting e.g. to a continuous casting apparatus (13) or a mechanical mixer;
an injection apparatus (39) arranged in the center of said tubular passage (37) for a liquid additive, the outlet being oriented in the direction of flow of said bulk material;
**characterised in that**
a funnel-shaped guide piece (101) is provided in said passage of said mixing device (15), wherein said outlet of said injection apparatus (39) is arranged above said funnel-shaped guide piece (101).

6. The mixing device according to claim 5, further comprising a gap for said bulk material to pass through, wherein said gap is present between said injection apparatus and said tube segment (23).

7. The mixing device according to claim 5 or 6, **characterised in that** said gap is an annular gap (99) present between said injection apparatus (39) and a jacket of said tube-segment (23).

8. The mixing according to any of claims 5 to 8, **characterised in that** said injection apparatus (39) possesses a core (41) and a nozzle arranged on the bottom of said core.

9. The mixing device according to any of claims 5 to8, **characterised in that** a guide piece (101; 101a) is provided below said injection apparatus (39).

10. The mixing device according to claim 9, **characterised in that** said guide piece (101a) is displaceable in said tube segment (23).

11. The mixing device according to claim 9 or 10, **characterised in that** said core (41) and said guide piece (101) can be moved relative to one another from an open position, in which an annular gap (99) is formed, to a closed position, in which said passage for said bulk material is blocked, and vice versa.

12. An apparatus for producing extruded products made of a granulate polymer, the apparatus comprising:
a mixing device (15) according to any of claims 5 to 11,
a feeding device (17) for at least one polymer provided on, or connected to, said inlet of said mixing device (15), hereinafter also called first connection side, and
a continuous casting apparatus (13) provided on, or connected to, said outlet of said mixing device, hereinafter also called second connection side.

## Revendications

1. Procédé pour mélanger des matières en vrac coulant librement, en particulier un granulat plastique solide, avec un liquide, en particulier un additif liquide, procédé pour lequel un dispositif d'injection est placé au centre d'une section de tuyau (23) qui sert à amener les matières en vrac et des matières en vrac guidées par l'ouverture d'entrée côté face dans la section de tuyau (23) sont au moins partiellement humidifiées avec un liquide,
**caractérisé en ce**
**que** l'ouverture de sortie du dispositif d'injection (39) est placée au-dessus d'une pièce de guidage configurée en forme d'entonnoir (101).

2. Procédé selon la revendication 1, **caractérisé en ce que** le dispositif d'injection (39) est placé de telle manière qu'il existe une fente (99) entre le dispositif d'injection (39) et la section de tuyau (23) pour le passage des matières en vrac.

3. Procédé selon la revendication 1 ou 2, **caractérisé en ce que** les matières en vrac sont guidées par une fente annulaire (99) qui existe dans le passage.

4. Procédé selon l'une des revendications 1 à 3, **caractérisé en ce que** la largeur de la fente annulaire (99) est réglée en fonction des paramètres physiques du liquide et des matières en vrac.

5. Dispositif de mélange avec une section de tuyau (23), de préférence en forme de tuyau, qui définit un passage avec
- un premier côté de raccord (25) avec une ouverture d'entrée (26) pour le raccord d'un dispositif d'alimentation (17) pour un solide capable de couler,
- un second côté de raccord (27) avec une ouverture de sortie (28) pour le raccord, par exemple, d'un dispositif de coulée continue (13) ou d'un mélangeur mécanique ainsi
- qu'un dispositif d'injection (39) placé au centre du passage en forme de tuyau (37) pour un additif liquide dont l'ouverture de sortie est orientée dans le sens d'écoulement des matières en vrac,
**caractérisé en ce**
**qu'**il est prévu une pièce de guidage (101) configurée en forme d'entonnoir dans le passage du dispositif de mélange (15) et que l'ouverture de sortie du dispositif d'injection (39) est placée au-dessus de la pièce de guidage (101) configurée en forme d'entonnoir.

6. Dispositif de mélange selon la revendication 5, **caractérisé en ce qu'**il existe une fente entre le dispositif d'injection (39) et la section de tuyau (23) pour le passage des matières en vrac.

7. Dispositif de mélange selon l'une des revendications 5 à 7, **caractérisé en ce qu'**il existe une fente annulaire (99) entre le dispositif d'injection (39) et l'enveloppe de la section de tuyau (23).

8. Dispositif selon l'une des revendications 5 à 8, **caractérisé en ce que** le dispositif d'injection (39) possède un noyau (41) et une tuyère placée sur le côté inférieur du noyau.

9. Dispositif de mélange selon l'une des revendications 5 à 8, **caractérisé en ce qu'**il est prévu une pièce de guidage (101 ; 101a) au-dessous du dispositif d'injection (39).

10. Dispositif de mélange selon la revendication 9, **caractérisé en ce que** la pièce de guidage (101a) est déplaçable dans la section de tuyau (23).

11. Dispositif de mélange selon la revendication 9 ou 10, **caractérisé en ce que** le noyau (41) et la pièce de guidage (101) sont déplaçables l'un par rapport à l'autre d'une position ouverte, dans laquelle il est formé une fente annulaire (99), à une position fermée dans laquelle le passage est bloqué pour les matières en vrac, et vice-versa.

12. Dispositif pour produire des produits extrudés à partir de polymères, en particulier d'un granulat de polymères avec
- un dispositif de mélange (15) selon l'une des revendications 5 à 11,
- un dispositif d'alimentation (17) pour au moins un polymère qui est prévu ou raccordé à l'ouverture d'entrée (26) du dispositif de mélange, ci-dessous également désigné de premier côté de raccord et
- un dispositif de coulée continue (13) qui est prévu ou raccordé à l'ouverture de sortie (28) du dispositif de mélange, ci-dessous également désigné de second côté de raccord.
